# EUROPEAN PATENT APPLICATION

(11) **EP 0 807 781 A2**
(43) Date of publication of application: **19.11.1997**
(21) Application number: 97303328.5
(22) Date of filing: 16.05.1997
(51) Int. Cl.: F16L 33/207

(54) **Hose connector**

(30) Priority: 17.05.1996 GB 9610326
(71) Applicant: Guest, John Derek, Maidenhead, Berkshire SL6 2RX (GB)
(72) Inventor: Guest, John Derek, Maidenhead, Berkshire SL6 2RX (GB)
(74) Representative: Bayliss, Geoffrey Cyril

(57) **Abstract**

The disclosure relates to a hose connector comprising a rigid tube (10), an end portion (11) of which is adapted to engage in an end part of a hose (25). The end portion of the tube has an encircling abutment (14) spaced from said end of the tube and the arrangement further including a deformable metal sleeve (20) for encircling the end portion of the tube. The sleeve has in-turned teeth (23) at one end angled into the sleeve and engageable with one side of said abutment (14) remote from the end portion of the tube to retain the sleeve on the tube. The sleeve is deformed after a hose end has been inserted in the sleeve over the end portion of the tube said abutment to grip the hose along the end portion of the tube and to trap an end part of the hose against said one side of the abutment means to hold the hose on the tube.

## Description

This invention relates to hose connectors for connecting an end of a hose to a rigid tube.

Currently, rubber hoses are typically held onto a metal body by means of a metal cap pressed over the hose which is then crimped to crush the hose onto the metal body. The crushing effect provides both mechanical retention and the sealing pressure required between the hose and metal body to prevent loss of fluid. However, there is no ideal method of connecting a wide variety of rubber hoses to a plastics metal body without inducing high compression loads in the plastics components.

The invention provides a hose connector comprising a rigid tube, a portion of which terminates at one end of the tube and is adapted to engage in an end part of a hose, the end portion of the tube having encircling abutment means spaced from said end of the tube, the arrangement further including a deformable metal sleeve for encircling the end portion of the tube, the sleeve having in-turned teeth at one end angled into the sleeve and engage able with one side of said abutment means remote from said end of the tube to retain the sleeve on the tube, the sleeve being deformable when a hose end is inserted between the end portion of the sleeve and tube over said abutment means to grip the hose along the end portion of the tube and to trap an end part of the hose against said one side of the abutment means to hold the hose on the tube.

Preferably the sleeve has a multiplicity of in-turned teeth spaced around said end thereof and angled inwardly of the sleeve for engagement with said one side of the abutment.

The abutment means on the tube may comprise an annular integral shoulder on the tube, said one side of which remote from the end of the tube lies in a radial plane with respect to the tube for engagement by the inner edges of the teeth on the deformable sleeve.

In the latter arrangement the side of the shoulder adjacent said one end of the tube may be angled to form a ramp to assist in guiding the open end of the hose over the shoulder.

In any of the above arrangements a second encircling abutment may be formed on the tube adjacent to the first abutment and on the side remote from said end of the tube, the teeth on the sleeve engaging the tube between said abutments to locate the sleeve over said end portion of the tube.

Also in any of the above arrangements said end of the sleeve may have a short tapered portion to assist in inserting the sleeve in the end of a hose.

The following is a description of some specific embodiments of the invention, reference being made to the accompanying drawings in which :
Figure 1 is a side view of a metal or plastics tube to which a hose is to be connected;
Figure 2 is a sectional view through a metal cap which engages over the tube to secure an end part of a hose to it;
Figure 3 is an end view of the cap shown in Figure 2;
Figure 4 is a side view of the tube of Figure 1 with the cap of Figure 2 assembled on it;
Figures 5 and 6 show the insertion of an end part of a flexible hose on the end of the tube within the cap;
Figure 7 shows the assembly of Figure 6 after the cap has been crimped down onto the hose to lock and seal the hose to the tube; and
Figure 8 shows the tall assembly sequence.

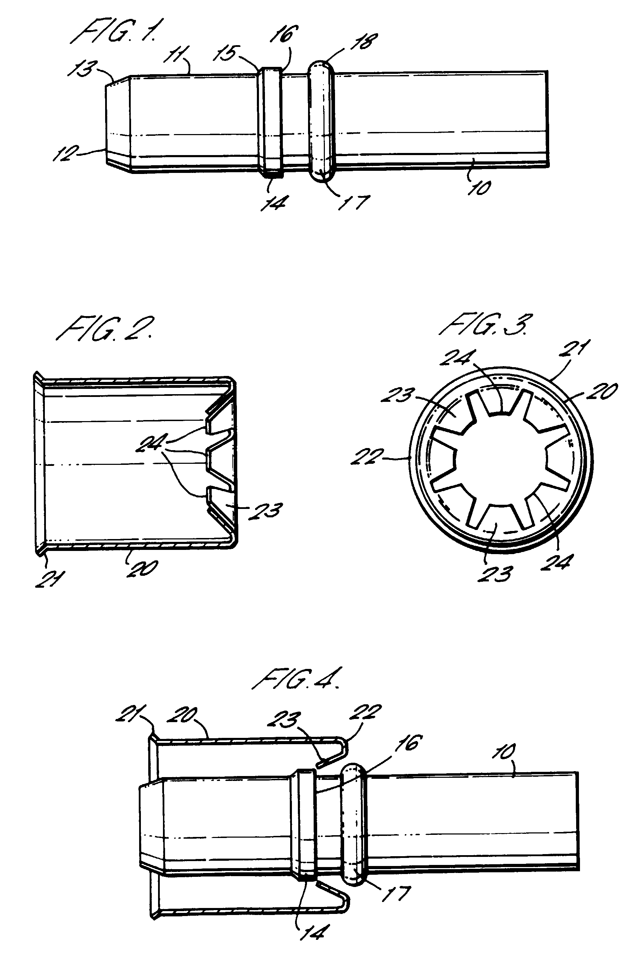

Referring firstly to Figure 1 of the drawings, there is shown a metal or plastics tube 10 forming part of a component to which a flexible synthetic or natural rubber hose is to be attached. The tube has an end portion 11 to be inserted into the end of a hose having an end 12 with a short tapered section 13 to facilitate entry of the tube end into the hose.

An integral shoulder 14 encircles the tube at a location space from the end 12 having an inclined face 15 on the side adjacent the end of the tube to form a ramp to ease an end of the tube over the shoulder and having a radial face 16 on the opposite side thereof for a purpose to be described below. A second, slightly larger annular abutment 17 is formed integrally with a tube adjacent the shoulder 14 and the opposite side thereof to the end 12 of the tube and having a rounded profile 18.

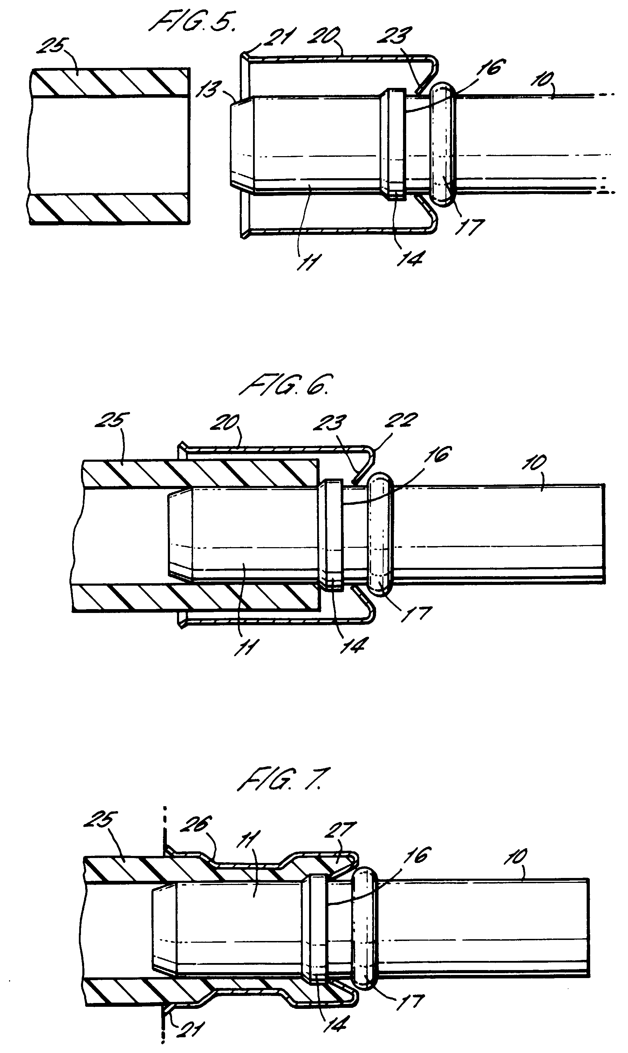

Referring now to Figure 2 of the drawings, there is shown a cylindrical metal cap 20 intended to be located on the end portion 11 of the tube and having a flared opening 21 at one end to facilitate insertion of the hose into the cap, as described below, and at its other end, a narrow end wall 22 from which a number of closely spaced teeth 23 extend angled radially and inwardly of the end wall. The teeth, in their unstressed or free state, have divergent gaps between them and terminate in arcuate inner edges 24 dimensioned such that the inner periphery of the teeth is slightly larger in diameter than the tube 10. Thus when the cap is located on the end portion of the tube, the teeth pass with clearance over the tube and are snapped over the shoulder 15 to engage behind the radial face 16 of the shoulder and retain the cap on the tube. The abutment 17 prevents the cap from passing further along the tube.

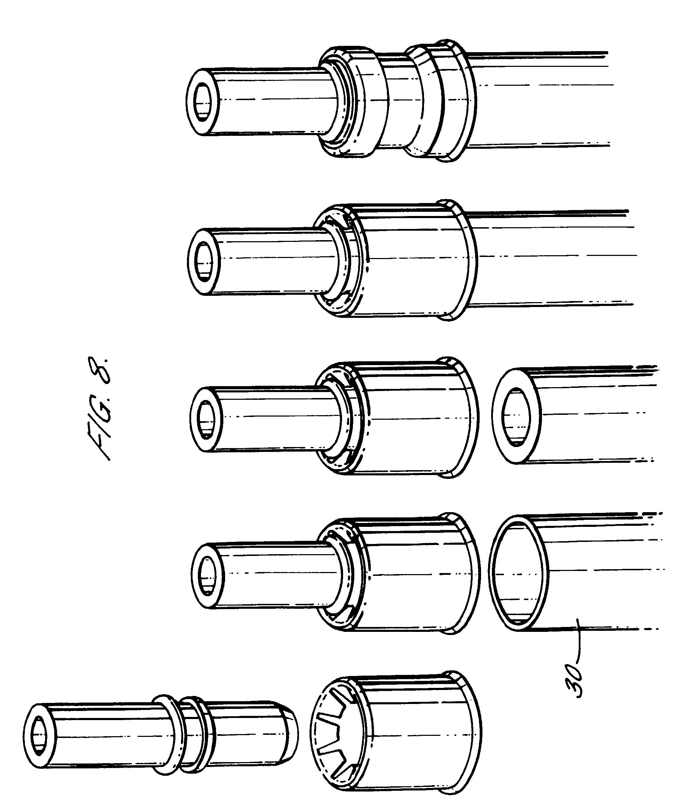

An end part of a rubber hose 20 is offered up to the assembly as shown in Figure 5 and is engaged on the end portion 11 of the tube within the cap as shown in Figure 6. The full sequence of making the connection is shown in Figure 8 to which reference should be made. The hose is pressed onto the tube until the end of the hose passes over the shoulder 15 and a short portion of the hose projects beyond the shoulder. The cylindrical wall of the cap is then crimped or closed radially down throughout its length to force the hose inwardly on the tubular portion of the body using a cylindrical tool 30 of appropriate size. The teeth 23 22 are thereby locked against the side 16 of the shoulder 14 with an end portion of the hose indicated at 25 also trapped against the shoulder 16 to hold the hose against removal from the tube. In a subsequent operation, a central region 26 of the cylindrical body of the cap is given an additional crimping to form an encircling recess as indicated at 26 to provide an increased force in that region clamping the hose to the end portion of the tube and thereby to provide an effective seal between the hose and tube in addition to providing further resistance to removal of the hose from the tube.

Thus the arrangement enables a hose to be readily connected to a tubular element on a plastics or metal body. Any force tending to pull the cup off the body will be resisted by the teeth on the cap engaging behind the shoulder on the tube and by deforming the wall of the cap into the tube, as indicated at 26, the cap firmly resists withdrawal of the hose. Thus the force required between the hose and end portion of the tubular body is only that needed to create a seal between the hose and body and not for retention of the hose on the body which is catered for by the cap engaging with the hose and with the shoulder on the body, as indicated above.

The cap can be made out of steel or aluminium. Some grades of material may not be inherently flexible enough for the teeth to spring back and engage behind the shoulder. Therefore it may be necessary for a forming tool to be inserted through the cap to bend the teeth inwards so that they are sufficiently engaged behind the shoulder. This forming tool can be incorporated within the assembly process of pushing the metal cap on in the first place or can even be the end of the rubber hose itself or a small metal or plastic disc at the end of the hose.

## Claims

1. A hose connector comprising a rigid tube, a portion of which terminates at one end of the tube and is adapted to engage in an end part of a hose, the end portion of the tube having encircling abutment means spaced from said end of the tube, the arrangement further including a deformable metal sleeve for encircling the end portion of the tube, the sleeve having in-turned teeth at one end angled into the sleeve and engageable with one side of said abutment means remote from said end of the tube to retain the sleeve on the tube, the sleeve being deformable when a hose end is inserted between the end portion of the sleeve and tube over said abutment means to grip the hose along the end portion of the tube and to trap an end part of the hose against said one side of the abutment means to hold the hose on the tube.

2. A hose connector as claimed in claim, wherein the sleeve has a multiplicity of in-turned teeth spaced around said end thereof and angled inwardly of the sleeve for engagement with said one side of the abutment.

3. A hose connector as claimed in claim 1 or claim 2, wherein said abutment means comprise an annular integral shoulder on the tube, said one side of which remote from the end of the tube lies in a radial plane with respect to the tube for engagement by the inner edges of the teeth on the deformable sleeve.

4. A hose connector as claimed in claim 3, wherein the side of the shoulder adjacent said one end of the tube is angled to form a ramp to assist in drawing the open end of the hose over the shoulder.

5. A hose connector as claimed in any of the preceding claims, wherein a second encircling abutment is formed on the tube adjacent to the first abutment and on the side remote from said end of the tube, the teeth on the sleeve engaging the tube between said abutments to locate the sleeve over said end portion of the tube.

6. A hose connector as claimed in any of the preceding claims, wherein said end of the sleeve has a short tapered portion to assist in inserting the sleeve in the end of a hose.

7. A hose connector as claimed in any of the preceding claims, wherein the end of the sleeve encircling said end of the tube is flared to assist in guiding an end of the hose into the sleeve.
